# FASCICULE DE BREVET EUROPEEN

(11) **EP 3 483 766 B1**
(45) Date de publication et mention de la délivrance du brevet: **12.03.2025**
(21) Numéro de dépôt: 18202466.1
(22) Date de dépôt: 25.10.2018
(51) Int. Cl.: H04L 9/40, G06F 21/55

(54) **PROCÉDÉ ET DISPOSITIF DE SURVEILLANCE D'AU MOINS UNE ACTIVITÉ D'UN OBJET CONNECTÉ**
ÜBERWACHUNGSVERFAHREN UND VORRICHTUNG FÜR WENIGSTENS EINE AKTIVITÄT EINES VERBUNDENEN OBJEKT
MONITORING METHOD AND DEVICE OF AT LEAST ONE ACTIVITY OF A CONNECTED OBJECT

(30) Priorité: 08.11.2017 FR 1760484
(43) Date de publication de la demande: 15.05.2019
(73) Titulaire: STMicroelectronics (Grand Ouest) SAS, 72100 Le Mans (FR)
(72) Inventeur: RUELLE, Frédéric, 72220 MARIGNE-LAILLE (FR)
(74) Mandataire: Casalonga

(56) Documents cités:
- US-A1- 2016 028 750
- US-A1- 2017 318 039

## Description

Des modes de mise en œuvre et de réalisation de l'invention concernent l'internet des objets, communément connue de l'homme du métier sous l'acronyme anglosaxon IoT (« Internet of Things » en anglais), et plus particulièrement les objets connectés au réseau d'internet au sens large, c'est-à-dire y compris par exemple le réseau local (« Local Area Network » : LAN en anglais), le réseau étendu (« Wide Area Network » : WAN en anglais), destinés à communiquer mutuellement des données informatiques et à réaliser des fonctionnements pratiques et relativement simples, tels que les détecteurs de température connectés, les détecteurs d'ouverture porte connectés et les commutateurs électriques connectés.

Durant ces dernières années, des objets connectés sont de plus en plus utilisés dans la vie quotidienne.

La connectivité à l'internet d'un objet connecté permet avantageusement une surveillance et un contrôle de l'état de fonctionnement de l'objet connecté à distance.

De plus en plus, de nouveaux fonctionnements sont développés pour des objets connectés dédiés, ce qui exige d'éventuelles modifications logicielles ou des mises à niveau des microprogrammes (« firmware » en anglais) de ces objets connectés.

Cependant, en plus de l'existence éventuelle d'une faille de sécurité dans la version initiale des objets connectés, une telle modification logicielle ou une telle mise à niveau via l'internet augmente malheureusement la possibilité d'une modification d'objets connectés via des logiciels malveillants voire la possibilité d'un piratage informatique (« hacking » en anglais), ce qui pourrait résulter en un dommage important.

Une solution classique pour résoudre ce problème de sécurité consiste en l'utilisation d'un mécanisme complexe basé sur des ressources cryptographiques, par exemple une signature numérique, de façon à vérifier l'autorisation de chaque intervention sur les objets connectés.

Toutefois, ce mécanisme exige un moyen de contrôle cryptographique et une unité de traitement ayant une puissance de calcul élevée, qui sont généralement trop coûteux notamment pour des objets connectés à un coût modéré (« low cost » en anglais).

Le document US 2016/028750 A1 (DI PIETRO ANDREA [CH] ET AL) 28 janvier 2016 (2016-01-28) divulgue une analyse des communications d'un noeud de réseau, les paquets étant classifiés comme bénin, inconnus ou malicieux.

Un score d'anomalie déclenche différentes actions lorsque la bande passante utilisé, le délai de réponse ou le nombre de requête est déclaré anormal.

Les paquets classifiés comme inconnus sont envoyés sut un serveur ou une analyse plus poussée (deep inspection) est conduite et le modèle utilisé est mis à jour sur le serveur, puis renvoyé au noeud.

Le document US 2017/318039 A1 (KARETI SREENADH [IN]) 2 novembre 2017 (2017-11-02) divulgue une détection de SPA (Sleep Privation attack) ou un attaquant envoie des requêtes à un objet connecté dans le but de vider sa batterie.

Comme contre-mesure, La quantité d'énergie et de temps utilisée pour servir des requêtes est analysée et des actions déclenchées quand une limite est dépassée.

Un algorithme d'apprentissage machine supervisée (impliquant l'utilisateur) pour classifier le traitement des requêtes est divulgué.

Il existe ainsi un besoin de proposer une solution technique à faible complexité et à faible coût permettant de surveiller des activités anormales d'un objet connecté sans utiliser un moyen de contrôle cryptographique de façon à protéger l'objet connecté contre des modifications par des logiciels malveillants ou des piratages informatiques.

L'invention est définie par les revendications indépendantes.

Les revendications dépendantes donnent des exemples d'implémentation.

Selon un aspect, il est proposé un procédé de surveillance d'au moins une activité d'un objet connecté. Ce procédé comprend
une première mesure périodique d'au moins un signal interne représentatif d'au moins une activité de l'objet connecté,
un premier calcul non-cryptographique d'au moins un paramètre d'activité représentatif de ladite au moins une activité à partir dudit au moins un signal interne mesuré,
une comparaison entre chaque paramètre d'activité calculé à l'issue du premier calcul et une gamme de consignes du paramètre correspondant, et
un déclenchement d'au moins une action de sûreté si au moins un paramètre d'activité calculé à l'issue du premier calcul se trouve en dehors de ladite gamme de consignes.

En pratique, pour un objet connecté destiné à réaliser un ou des fonctionnements monotones et simples, il est possible de tirer un profil caractéristique indépendant de son fonctionnement mais dépendant de l'utilisation de ses ressources, par exemple de sa source d'alimentation ou de ses moyens de communication, de façon à élaborer une gamme de profils acceptables pour déterminer si la ou les activités dudit objet connecté sont normales ou pas.

En d'autres termes, on fait la différence ici entre le fonctionnement de l'objet connecté et la surveillance de sont activité.

Le fonctionnement de l'objet connecté se traduit notamment par la transmission de données qui sont spécifiques du fonctionnement de l'objet et de sa nature. Ainsi un capteur de température transmet notamment en fonctionnement des informations de température tandis qu'un capteur pression transmet notamment des informations de pression.

Par contre la surveillance de l'activité de l'objet connecté est indépendante du type d'objet (capteur de température, pression, etc.) et du type d'informations transmises relatives à son fonctionnement (valeurs de température, valeurs de pression, etc.), mais a trait à d'autres paramètres relatifs à l'activité de l'objet (par exemple fréquence du débit de transmission de données, consommation de l'objet, plages de valeurs transmises aberrantes, etc.) quelles que soient la nature des données transmises (température, pression, etc.).

Avantageusement, un tel procédé permet de surveiller le ou les paramètres d'activité correspondant au ou aux profils caractéristiques de l'objet connecté. Si ce ou ces paramètres d'activité sont détecté(s) en dehors de la ou des gammes de consignes, autrement dit la ou les gammes de profil acceptables, les activités de l'objet connecté peuvent être considérées comme étant anormales et il est prévu qu'au moins une action de sûreté est déclenchée à la suite de cette détection de façon à protéger l'objet connecté.

Il convient de noter que le premier calcul n'utilise aucune ressource cryptographique et n'exige donc pas une puissance de calcul élevée. On peut avantageusement ajuster la période du premier calcul en fonction de la fréquence d'activité de l'objet connecté de façon à encore équilibrer sa performance et sa consommation énergétique.

Selon un mode de mise en œuvre, chaque paramètre d'activité comporte un paramètre de consommation et/ou un paramètre de transmission de données.

Il convient de noter que le paramètre de consommation ou le paramètre de transmission de données de l'objet connecté dépend du rythme et de l'intensité d'activités de l'objet connecté mais ne dépend pas de son ou de ses fonctionnements.

A titre d'exemple non limitatif, le paramètre de consommation peut être un paramètre choisi dans le groupe formé par les paramètres suivants : consommation moyenne, courant moyen et valeur crête de courant, et
le paramètre de transmission de données peut être un paramètre choisi dans le groupe formé par les paramètres suivants : taille de paquets, débit de transmission et modèle de communication.

Selon un mode de mise en œuvre, chaque action de sûreté est choisie dans le groupe formé par : une coupure d'alimentation de l'objet connecté, une réinitialisation de paramètres par défaut, et une transmission de signaux de notification à un serveur informatique par l'intermédiaire d'une liaison de communication.

A titre indicatif, la liaison de communication peut par exemple être basée sur une technologie choisie dans le groupe formé par les technologies : LoRa, SigFox, réseau de téléphonie mobile, WiFi, et Ethernet.

Selon un mode de mise en œuvre, la gamme de consignes de chaque paramètre d'activité peut être prédéterminée, par exemple préconfigurée par le fabricant de l'objet connecté.

Selon un autre mode de mise en œuvre, la gamme de consignes de chaque paramètre d'activité est destinée à être mise à jour dans une phase d'apprentissage.

Cette phase d'apprentissage permet avantageusement à un utilisateur de l'objet connecté d'aider l'objet connecté soit à affiner spontanément les paramètres d'activité, soit à réadapter les paramètres d'activité à une éventuelle mise à niveau d'un microprogramme contenu dans l'objet connecté.

La phase d'apprentissage peut par exemple comporter
une deuxième mesure périodique, sous autorisation d'un utilisateur de l'objet connecté, dudit au moins un signal interne pendant une durée prédéterminée ou configurable par l'utilisateur,
un deuxième calcul non-cryptographique dudit au moins un paramètre d'activité à partir dudit au moins un signal interne mesuré pendant ladite durée, et
une mise à jour de la gamme de consignes du paramètre d'activité correspondant à partir de chaque paramètre d'activité calculé à l'issue du deuxième calcul.

Selon un autre aspect, il est proposé un objet connecté comprenant un dispositif de surveillance d'au moins une activité de l'objet connecté.

Ledit dispositif de surveillance comprend
un étage de mesure configuré pour effectuer une première mesure périodique d'au moins un signal interne représentatif de ladite au moins une activité de l'objet connecté,
un étage de calcul configuré pour effectuer un premier calcul non-cryptographique d'au moins un paramètre d'activité à partir dudit au moins un signal interne mesuré,
un étage de comparaison configuré pour comparer chaque paramètre d'activité calculé et une gamme de consignes du paramètre d'activité correspondant, et
un étage de contrôle configuré pour déclencher au moins une action de sûreté si au moins un paramètre d'activité calculé se trouve en dehors de ladite gamme de consigne.

Selon un mode de réalisation, chaque paramètre d'activité comporte un paramètre de consommation et/ou un paramètre de transmission de données.

A titre indicatif mais non limitatif, le paramètre de consommation peut être un paramètre choisi dans le groupe formé par les paramètres suivants : consommation moyenne, courant moyen et valeur crête de courant.

Le paramètre de transmission de données peut par exemple être un paramètre choisi dans le groupe formé par les paramètres suivants : taille de paquets de données transmises, débit de transmission et protocole de communication.

Selon un mode de réalisation, chaque action de sûreté est choisie dans le groupe formé par : une coupure d'alimentation de l'objet connecté, une réinitialisation de paramètres par défaut, et une transmission de signaux de notification à un serveur informatique par l'intermédiaire d'une liaison de communication.

La liaison de communication peut par exemple être basée sur une technologie choisie dans le groupe formé par les technologies : LoRa, SigFox, réseau de téléphonie mobile, WiFi, et Ethernet.

Selon un autre mode de réalisation, l'objet connecté comprend en outre des moyens de traitement configurés pour générer des informations résultant du fonctionnement de l'objet connecté et des moyens de communication configurés pour transmettre ces informations à l'extérieur de l'objet connecté sur ladite liaison de communication.

Comme indiqué ci-avant, la fonctionnalité du dispositif de surveillance est différente de celle des moyens de traitement.

Le dispositif de surveillance peut par exemple être incorporé sous forme de module logiciel dans une mémoire programme non modifiable des moyens de traitement.

Un tel logiciel est alors avantageusement protégé.

Selon une variante, le dispositif de surveillance est incorporé dans un microcontrôleur par exemple du type STM8^{®} commercialisé par la société STMicroelectronics, configuré pour recevoir au moins une partie des informations transmises par les moyens de traitement à des fins de surveillance. Le microcontrôleur comporte un programme d'exécution stocké dans une mémoire programme non modifiable et n'a aucune liaison avec les moyens de communication.

Selon une autre variante, le dispositif de surveillance est couplé aux moyens de communication de façon à transmettre les signaux de notification sur ladite liaison de communication.

Selon un mode de réalisation, la gamme de consignes de chaque paramètre est prédéterminée.

Selon un autre mode de réalisation, le dispositif de surveillance est configuré pour mettre à jour la gamme de consignes de chaque paramètre d'activité dans une phase d'apprentissage.

A titre indicatif non limitatif, dans la phase d'apprentissage,
l'étage de mesure est configuré pour effectuer une deuxième mesure périodique, sous autorisation d'un utilisateur de l'objet connecté, dudit au moins un signal interne pendant une durée prédéterminée ou configurable par l'utilisateur,
l'étage de calcul est configuré pour effectuer un deuxième calcul non-cryptographique dudit au moins un paramètre d'activité à partir dudit au moins un signal interne mesuré pendant ladite durée, et
l'étage de contrôle est en outre configuré pour mettre à jour la gamme de consignes du paramètre d'activité correspondant à partir de chaque paramètre d'activité calculé à l'issue du deuxième calcul.

Selon un autre aspect, il est proposé un dispositif de surveillance incorporé dans un objet connecté tel que défini ci-avant.

Selon encore un autre aspect, il est proposé un système électronique comportant un ou plusieurs objets connectés tels que définis ci-dessus.

D'autres avantages et caractéristiques de l'invention apparaîtront à l'examen de la description détaillée de modes de mise en œuvre et de réalisation, nullement limitatifs, et des dessins annexés sur lesquels :

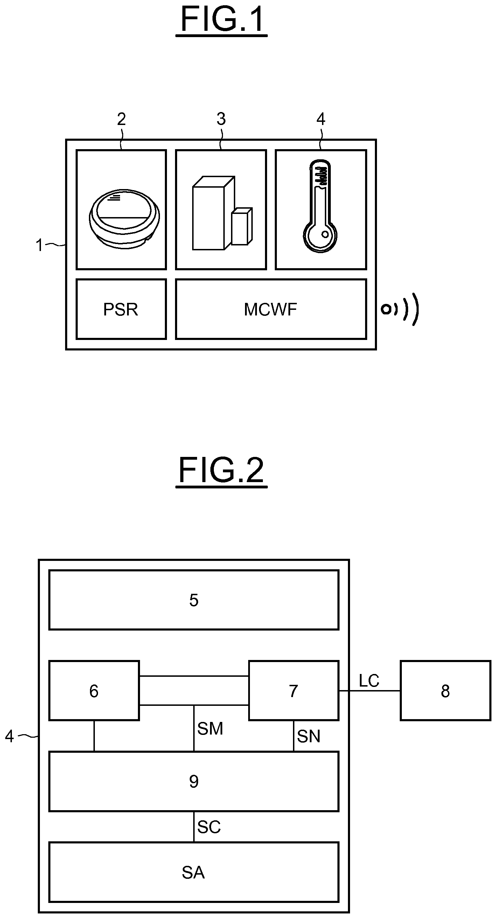

- les figures 1 à 5 illustrent schématiquement des modes de mise en œuvre et de réalisation de l'invention.

La référence 1 dans la figure 1 désigne un système électronique, ici par exemple un ensemble d'objets connectés connu sous l'appellation « Internet des objets » (« Internet of Things » : IoT en anglais) destiné à assurer la sécurité domotique d'un logement tel qu'une maison ou un bureau.

Ce système 1 comporte plusieurs objets dits connectés, ici par exemple un capteur de fumée connecté 2, un capteur d'ouverture de porte 3, et un capteur de température 4.

Ce système 1 comporte en outre une passerelle PSR (« gateway » en anglais) connue de l'homme du métier et destinée à gérer les capteurs 2 à 4.

Ces capteurs 2 à 4 sont connectés à l'internet, par exemple via un module de communication Wi-Fi MCWF, conformé aux normes IEEE 802.11, intégré dans le système 1.

De ce fait, ce système 1 permet à son utilisateur
- de vérifier à distance, par exemple via une application logicielle pour des téléphones intelligents (« Smart Phone » en anglais), l'état de fonctionnement de chaque capteur 2 à 4,
- de recevoir un ou des avertissements via l'internet lors de la présence d'une valeur détectée anormale par un des capteurs 2 à 4, par exemple une fumée détectée dans l'air ambiant à proximité du capteur de fumée connecté 2, et
- de contrôler à distance des fonctionnements de chaque capteur 2 à 4.

Il convient de noter que les capteurs 2 à 4 sont destinés ici à réaliser des fonctionnements relativement réguliers et simples. Autrement dit, il n'est pas nécessaire d'avoir des moyens de traitement complexes ni une puissance de calcul élevée.

Ces capteurs 2 à 4 sont par conséquent adaptés à être fabriqués à un coût modéré (« low cost » en anglais) et ne comportent donc pas de moyens de contrôle cryptographiques coûteux visant à éviter des interventions non-autorisées.

A des fins de simplification et à titre d'exemple non limitatif, on se réfère maintenant à la figure 2 pour illustrer un exemple de réalisation du capteur de température 4.

Le capteur de température 4 comprend
- des moyens de détection 5 configurés pour détecter une ou des températures à proximité du capteur de température 4,
- des moyens de traitement 6 configurés pour recevoir les températures détectées et générer des informations résultant du fonctionnement du capteur 4, ici des valeurs de détection de la température et d'éventuels avertissements si ces valeurs de détection dépassent des seuils de consignes,
- des moyens de communication 7 configurés pour transmettre ces valeurs de détection à un serveur informatique 8 via une liaison de communication LC de façon à permettre à un ou des utilisateurs du capteur 4 de consulter ces valeurs de détection et de recevoir les éventuels avertissements,

- un dispositif de surveillance 9 configuré pour surveiller des paramètres d'activité PA du capteur 4 tels qu'un débit de données transmises, une taille de paquets de données transmises, un courant moyen, la valeur crête d'un courant, et une consommation moyenne, et
- une source d'alimentation SA.

Comme on l'a indiqué ci-avant, les fonctionnements réalisés par le capteur de température 4, ici pour capter régulièrement la température à proximité du capteur de température 4, sont relativement réguliers et simples.

Par conséquent, les paramètres d'activité PA du capteur 4 qui ne dépendent pas de ces fonctionnements eux-mêmes mais dépendent d'actitivés du capteur 4 pour réaliser ces fonctionnements sont également censés être réguliers et stables lorsque le capteur 4 est dans son état normal.

En d'autres termes, si le capteur de température 4 fonctionne de façon normale, les paramètres d'activité PA, ici par exemple la consommation moyenne et le débit de transmission de données du capteur 4, se trouvent normalement toujours dans des plages de valeurs prévisibles pouvant être prédéterminées, par exemple lors de la fabrication du capteur 4.

Lorsque le capteur 4 est sujet à un piratage informatique ou est modifié via des logiciels malveillants, les paramètres d'activité PA seront modifiés de façon à se trouver en dehors des plages de valeurs prévisibles, ou plages de consignes.

Par exemple, la consommation moyenne d'un tel capteur 4 piraté et son débit de transmission de données seront augmentés pendant au moins un certain temps à la suite d'un tel piratage informatique.

De ce fait, il est possible de surveiller le bon fonctionnement du capteur de température 4 via un suivi régulier de ces paramètres d'activité PA.

Il convient de noter que la figure 2 illustre en effet un exemple de réalisation du capteur de température 4 dans lequel le dispositif de surveillance 9 est physiquement couplé aux moyens de traitement 6, aux moyens de communication 7 et à la source d'alimentation SA.

Le dispositif de surveillance 9 est configuré pour recevoir un signal de mesure SM de température délivré par les moyens de traitement 6 et un signal de courant SC délivré par la source d'alimentation SA.

Plus particulièrement, selon ce mode de réalisation, le dispositif de surveillance 9 est destiné à transmettre au serveur informatique 8 un ou des signaux de notification SN via les moyens de communication et la liaison de communication LC lorsque la ou les activités du capteur 4 sont considérées comme étant anormales par le dispositif de surveillance 9.

A titre indicatif mais non limitatif, la liaison de communication LC est basée sur une technologie choisie dans le groupe formé par les technologies : LoRa, SigFox, réseau de téléphonie mobile, WiFi, et Ethernet.

Le serveur informatique 8 peut se trouver localement dans le système 1 (non illustré sur la figure 2) ou avantageusement à distance sur « un Nuage » (« a Cloud » en anglais).

Lorsque le serveur informatique 8 reçoit le ou les signaux de notification SN, le serveur informatique 8 est configuré pour envoyer un avertissement à l'utilisateur par défaut du système 1 et pour lui demander l'autorisation d'une coupure d'alimentation du capteur 4 ou d'une mise à niveau d'un microprogramme contenu dans le capteur 4.

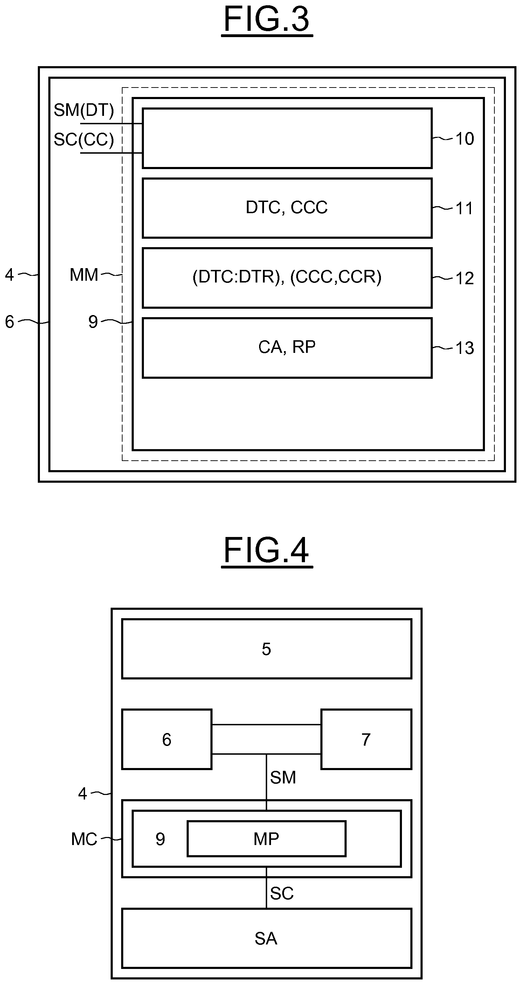

On se réfère maintenant à la figure 3 pour illustrer schématiquement un autre exemple de réalisation du dispositif de surveillance 9 et sa structure interne.

Dans cette variante, le dispositif de surveillance 9 est implémenté sous la forme d'un module logiciel incorporé dans les moyens de traitement 6, ici par exemple un microcontrôleur du type STM32^{®} commercialisé par la société STMicroelectronics.

Afin d'assurer que le dispositif de surveillance 9 ne soit pas modifié, par exemple par des logiciels malveillants, il est recommandé d'isoler ce dispositif de surveillance 9.

A cet égard, il est préférable d'implémenter le module logiciel dans un support non modifiable, par exemple une mémoire flash non modifiable MM.

Le dispositif de surveillance 9 comporte ici un étage de mesure 10, un étage de calcul 11, un étage de comparaison 12 et un étage de contrôle 13.

A titre indicatif mais non limitatif, les paramètres d'activité PA à surveiller par le dispositif de surveillance 9 comprennent
des paramètres de consommation PC tels que la consommation moyenne, le courant moyen et la valeur crête du courant, et
des paramètres de transmission PT tels que la taille de paquets transmises, le débit de transmission et le protocole de communication.

L'étage de mesure 10 est configuré pour effectuer une première mesure périodique d'au moins un signal interne représentatif d'au moins une activité du capteur 4, ici par exemple le signal de mesure SM représentatif du débit de transmission DT de données et le signal du courant SC de la source d'alimentation SA représentatif de la valeur crête du courant CC.

Il convient de noter que ces paramètres d'activité DT et SA sont tirés à partir des caractéristiques techniques du signal de mesure SM et du signal de courant SC mais non à partir des informations contenues dans le signal de mesure SM et le signal de courant SC.

En fonction des caractéristiques techniques du capteur 4, on peut prédéterminer une gamme de consignes du débit de transmission DTR, par exemple < 100 Mo/s, et une gamme de consignes de la valeur crête du courant CCR, par exemple < 200 mA.

Afin de minimiser son influence sur la performance du capteur 4, la première mesure peut par exemple être effectuée toutes les huit heures.

L'étage de calcul 11 est couplé à l'étage de mesure 10 et configuré pour effectuer un premier calcul non-cryptographique à partir du signal de mesure SM et du signal de courant SC de façon à obtenir le débit de transmission calculé DTC et la valeur crête du courant calculée CCC.

Avantageusement, une puissance de calcul élevée pour effectuer le premier calcul non-cryptographique n'est pas nécessaire, ce qui a donc peu d'influence sur la performance du capteur 4.

L'étage de comparaison 12 est configuré pour comparer les paramètres d'activité calculés DTC et CCC et les gammes de consignes des paramètres d'activité correspondants DTR et CCR.

Si les paramètres d'activité calculés DTC et CCC se trouvent respectivement dans leur gamme de consigne, cela signifie que le capteur 4 fonctionne dans son état normal et qu'il n'y pas d'activité anormale à signaler.

Dans le cas contraire, l'activité du capteur 4 est différente par rapport à son état normal et le capteur 4 a potentiellement subi un piratage informatique.

En conséquence, l'étage de contrôle 13 est configuré pour déclencher au moins une action de sûreté, ici par exemple une coupure d'alimentation CA du capteur 4 et une réinitialisation de paramètres RP par défaut de façon à éviter d'autres dommages plus importants.

Il convient de noter que ces actions de sûreté CA et RP sont également prévues dans le mode de réalisation du dispositif de surveillance 9 illustré sur la figure 2.

Selon un mode de réalisation préféré illustré sur la figure 4, le dispositif de surveillance 9 est incorporé dans un microcontrôleur MC, par exemple du type STM8^{®} commercialisé par la société STMicroelectronics, recevant le signal de mesure SM et le signal de courant SC.

Le dispositif de surveillance 9 comporte ici un programme d'exécution stocké dans une mémoire programme MP non modifiable et n'a aucune liaison avec les moyens de communication 7.

Autrement dit, le dispositif de surveillance 9 est protégé contre d'éventuelles modifications via des logiciels malveillants ou des piratages informatiques et n'est pas modifiable via les moyens de traitement 6 ou les moyens de communication 7.

Dans ce mode de réalisation, les actions de sûreté prévues par le dispositif de surveillance 9 comportent la coupure d'alimentation CA du capteur 4 et la réinitialisation de paramètres RP mais pas la transmission des signaux de notification SN.

Comme on l'a mentionné avant, le mode de réalisation du dispositif de surveillance 9 illustré sur la figure 2 prévoit éventuellement une mise à niveau d'un microprogramme contenu dans le capteur 4.

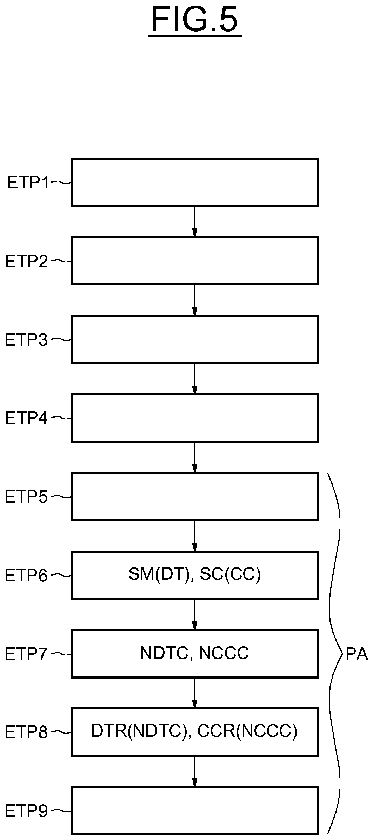

On se réfère maintenant à la figure 5 pour illustrer schématiquement un exemple de mise en œuvre d'une telle mise à niveau du microprogramme.

Si l'utilisateur autorise ladite mise à niveau ETP1, le serveur informatique 8 est configuré pour commander les moyens de traitement 6 de façon à télécharger une nouvelle version du microprogramme ETP2 via les moyens de communication 7.

Une fois la nouvelle version du microprogramme téléchargée ETP3, les moyens de traitement 6 sont configurés pour effectuer la mise à niveau du microprogramme ETP4 avec cette dernière version du microprogramme.

Comme la nouvelle version du microprogramme apporte éventuellement de nouveaux fonctionnements et de nouvelles configurations du capteur 4, le dispositif de surveillance 9 est en outre configuré pour démarrer une mise à jour ETP5 des gammes de consignes de chaque paramètre d'activité DTR et CCR dans une phase d'apprentissage PA à la suite de ladite mise à niveau du microprogramme.

Il convient de noter que l'utilisateur du capteur 4 peut également lancer la phase d'apprentissage PA sans une mise à niveau du microprogramme de façon à aider le capteur 4 à affiner spontanément ses paramètres d'activité DT, SA.

Pendant cette phase d'apprentissage PA, l'étage de mesure 10 est configuré pour effectuer une deuxième mesure périodique ETP6, sous autorisation de l'utilisateur du capteur 4, du signal de mesure SM représentatif du débit de transmission DT et du signal du courant SC de la source d'alimentation SA représentatif de la valeur crête du courant CC.

Cette deuxième mesure ETP6 possède par exemple une même périodicité que celle de la première mesure et la durée de cette deuxième mesure ETP6 peut être prédéterminée, par exemple égale à 24 heures, ou configurable par l'utilisateur du capteur 4, autrement dit l'utilisateur peut mettre un terme à la deuxième mesure quand il le souhaite.

L'étage de calcul 11 est en outre configuré pour effectuer, pendant ladite durée de la deuxième mesure, un deuxième calcul ETP7 non-cryptographique à partir du signal de mesure SM et du signal de courant SC de façon à obtenir un nouveau débit de transmission calculé NDTC et une nouvelle valeur crête du courant calculée NCCC.

L'étage de contrôle 13 est en outre configuré pour mettre à jour ETP8 les gammes de consigne de chaque paramètre DTR et CCR à partir du nouveau débit de transmission calculé NDTC et de la nouvelle valeur crête du courant calculée NCCC.

Le dispositif de surveillance 9 est configuré pour continuer la surveillance d'au moins une activité ETP9 du capteur 4 avec lesdites gammes de consigne à jour.

Il convient de noter que cette phase d'apprentissage n'est pas nécessaire pour des objets connectés qui n'ont pas besoin de mise à niveau pour des raisons de sécurité, tels que des stimulateurs cardiaques (« pacemakers » en anglais) connectés et des pompes à insuline connectées.

Ainsi, on obtient un dispositif de surveillance d'au moins une activité d'un objet connecté offrant un mécanisme de sécurité à faible coût et à faible complexité.

Ce mécanisme de sécurité permet avantageusement
un découpage physique entre ce dispositif de surveillance et des moyens de traitement et de communication de l'objet connecté de façon à renforcer la sécurité, et
un mode d'apprentissage adapté à une éventuelle mise à niveau du microprogramme de l'objet connecté.

## Revendications

1. Procédé de surveillance d'au moins une activité d'un objet connecté (2, 3, 4), le procédé étant mis en œuvre par un dispositif de surveillance dudit objet connecté, le procédé comprenant
une première mesure périodique d'au moins un signal interne (SM, SC) représentatif de ladite au moins une activité de l'objet connecté (2, 3, 4),
un premier calcul non-cryptographique d'au moins un paramètre d'activité (PA) représentatif de ladite au moins une activité à partir dudit au moins un signal interne mesuré,
une comparaison entre chaque paramètre d'activité calculé (DTC, CCC) à l'issue du premier calcul et une gamme de consignes prédéterminée du paramètre correspondant (DTR, CCR), et
un déclenchement d'au moins une action de sûreté si au moins un paramètre d'activité calculé (DTC, CCC) à l'issue du premier calcul se trouve en dehors de ladite gamme de consignes (DTR, CCR), dans lequel la gamme de consignes de chaque paramètre d'activité (DTR, CCR) étant destinée à être mise à jour dans une phase d'apprentissage (PA) également mise en en œuvre par ledit dispositif de surveillance,
et dans lequel la phase d'apprentissage (PA) comporte
une deuxième mesure périodique, sous autorisation d'un utilisateur de l'objet connecté, dudit au moins un signal interne (SM, SC) pendant une durée prédéterminée ou configurable par l'utilisateur,
un deuxième calcul non-cryptographique dudit au moins un paramètre d'activité (PA) à partir dudit au moins un signal interne mesuré par ladite deuxième mesure périodique pendant ladite durée, et
une mise à jour de la gamme de consignes du paramètre d'activité (DTR, CCR) correspondant à partir de chaque paramètre d'activité calculé (NDTC, NCCC) à l'issue du deuxième calcul.

2. Procédé selon la revendication 1, dans lequel chaque paramètre d'activité (PA) comporte un paramètre de consommation (PC) et/ou un paramètre de transmission de données (PT).

3. Procédé selon la revendication 2, dans lequel le paramètre de consommation (PC) est un paramètre choisi dans le groupe formé par les paramètres suivants : consommation moyenne, courant moyen et valeur crête de courant (CC), et le paramètre de transmission (PT) de données est un paramètre choisi dans le groupe formé par les paramètres suivants : taille de paquets de données transmises, débit de transmission (DT) et protocole de communication.

4. Procédé selon l'une quelconque des revendications précédentes, dans lequel chaque action de sûreté est choisie dans le groupe formé par : une coupure d'alimentation (CA) de l'objet connecté, une réinitialisation de paramètres (RP) par défaut, et une transmission de signaux de notification (SN) à un serveur informatique (8) par l'intermédiaire d'une liaison de communication (LC).

5. Procédé selon la revendication 4, dans lequel la liaison de communication (LC) est basée sur une technologie choisie dans le groupe formé par les technologies : LoRa, SigFox, réseau de téléphonie mobile, Wi-Fi, et Ethernet.

6. Objet connecté, comprenant un dispositif de surveillance (9) d'au moins une activité de l'objet connecté (2, 3, 4), le dispositif (9) comportant
un étage de mesure (10) configuré pour effectuer une première mesure périodique d'au moins un signal interne (SM, SC) représentatif de ladite au moins une activité de l'objet connecté (2 à 4),
un étage de calcul (11) configuré pour effectuer un premier calcul non-cryptographique d'au moins un paramètre d'activité (PA) à partir dudit au moins un signal interne mesuré,
un étage de comparaison (12) configuré pour comparer chaque paramètre d'activité calculé (DTC, CCC) et une gamme prédéterminée de consignes du paramètre d'activité correspondant (DTR, CCR), et
un étage de contrôle (13) configuré pour déclencher au moins une action de sûreté si ledit au moins un paramètre d'activité calculé (DTC, CCC) se trouve en dehors de ladite gamme de consignes (DTR, CCR),
dans lequel le dispositif de surveillance (9) est configuré pour mettre à jour la gamme de consignes de chaque paramètre d'activité (DTR, CCR) dans une phase d'apprentissage (PA),
et dans lequel dans la phase d'apprentissage (PA),
l'étage de mesure (10) est configuré pour effectuer une deuxième mesure périodique, sous autorisation d'un utilisateur de l'objet connecté, dudit au moins un signal interne (SM, SC) pendant une durée prédéterminée ou configurable par l'utilisateur,
l'étage de calcul (11) est configuré pour effectuer un deuxième calcul non-cryptographique dudit au moins un paramètre d'activité (PA) à partir dudit au moins un signal interne (SM, SC) mesuré par ladite deuxième mesure périodique pendant ladite durée, et
l'étage de contrôle (13) est en outre configuré pour mettre à jour la gamme de consignes du paramètre d'activité (DTR, CCR) correspondant à partir de chaque paramètre d'activité (NDTC, NCCC) calculé à l'issue du deuxième calcul..

7. Objet connecté selon la revendication 6, dans lequel chaque paramètre d'activité (PA) comporte un paramètre de consommation (PC) et/ou un paramètre de transmission de données (PT).

8. Objet connecté selon la revendication 7, dans lequel le paramètre de consommation (PC) est un paramètre choisi dans le groupe formé par les paramètres suivants : consommation moyenne, courant moyen et valeur crête de courant (CC), et le paramètre de transmission (PT) de données est un paramètre choisi dans le groupe formé par les paramètres suivants : taille de paquets de données transmises, débit de transmission (DT) et protocole de communication.

9. Objet connecté selon l'une quelconque des revendications 6 à 8, dans lequel chaque action de sûreté est choisie dans le groupe formé par : une coupure d'alimentation (CA) de l'objet connecté, une réinitialisation de paramètres (RP) par défaut, et une transmission de signaux de notification (SN) à un serveur informatique (8) par l'intermédiaire d'une liaison de communication (LC).

10. Objet connecté selon la revendication 9, dans lequel la liaison de communication (LC) est basée sur une technologie choisie dans le groupe formé par les technologies : LoRa, SigFox, réseau de téléphonie mobile, WiFi, et Ethernet.

11. Objet connecté selon la revendication 9 ou 10, comprenant en outre des moyens de traitement (6) configurés pour générer des informations résultant du fonctionnement de l'objet connecté (4) et des moyens de communication (7) configurés pour transmettre ces informations à l'extérieur de l'objet connecté (4) sur de ladite liaison (LC).

12. Objet connecté selon la revendication 11, dans lequel le dispositif de surveillance (9) est incorporé sous forme de module logiciel dans une mémoire programme (MM) non modifiable des moyens de traitement (7).

13. Objet connecté selon la revendication 11, dans lequel le dispositif de surveillance (9) est incorporé dans un microcontrôleur configuré pour recevoir au moins une partie des informations transmises par les moyens de traitement (6) à des fins de surveillance et comporte un programme d'exécution stocké dans une mémoire programme non modifiable, le microcontrôleur n'ayant aucune liaison avec les moyens de communication (7).

14. Objet connecté selon la revendication 13, dans lequel le dispositif de surveillance est couplé aux moyens de communication de façon à transmettre les signaux de notification sur ladite liaison (LC).

15. Dispositif de surveillance, incorporé dans un objet connecté selon l'une quelconque des revendications 6 à 14.

16. Système électronique, comprenant un objet ou plusieurs objets connectés (2, 3, 4) selon l'une quelconque des revendications 6 à 14.

## Patentansprüche

1. Verfahren zur Überwachung mindestens einer Aktivität eines verbundenen Objekts (2, 3, 4), wobei das Verfahren von einer Vorrichtung zur Überwachung des verbundenen Objekts umgesetzt wird, wobei das Verfahren umfasst
eine erste periodische Messung mindestens eines internen Signals (SM, SC), das für die mindestens eine Aktivität des verbundenen Objekts (2, 3, 4) repräsentativ ist,
eine erste nicht-kryptografische Berechnung mindestens eines Aktivitätsparameters (PA), der für die mindestens eine Aktivität repräsentativ ist, auf Grundlage des mindestens einen gemessenen internen Signals,
einen Vergleich zwischen jedem berechneten Aktivitätsparameter (DTC, CCC) am Ende der ersten Berechnung und einem vorbestimmten Bereich von Sollwerten des entsprechenden Parameters (DTR, CCR), und
eine Auslösung mindestens einer Sicherheitsaktion, wenn mindestens ein berechneter Aktivitätsparameter (DTC, CCC) am Ende der ersten Berechnung außerhalb des Sollwertbereichs (DTR, CCR) liegt, wobei der Sollwertbereich jedes Aktivitätsparameters (DTR, CCR) dazu bestimmt ist, in einer Lernphase (PA), welche ebenfalls von der Überwachungsvorrichtung umgesetzt wird, aktualisiert zu werden,
und wobei die Lernphase (PA) umfasst
eine zweite periodische Messung, unter Autorisierung eines Benutzers des verbundenen Objekts, des mindestens einen internen Signals (SM, SC) während einer vorbestimmten oder durch den Benutzer konfigurierbaren Dauer,
eine zweite nicht-kryptografische Berechnung des mindestens einen Aktivitätsparameters (PA) auf Grundlage des mindestens einen internen Signals, das während der Dauer durch die zweite periodische Messung gemessen wurde, und
eine Aktualisierung des Sollwertbereichs des entsprechenden Aktivitätsparameters (DTR, CCR) auf Grundlage jedes berechneten Aktivitätsparameters (NDTC, NCCC) am Ende der zweiten Berechnung.

2. Verfahren nach Anspruch 1, wobei jeder Aktivitätsparameter (PA) einen Verbrauchsparameter (PC) und/oder einen Datenübertragungsparameter (PT) umfasst.

3. Verfahren nach Anspruch 2, wobei der Verbrauchsparameter (PC) ein Parameter ist, ausgewählt aus der Gruppe, die von den folgenden Parametern gebildet wird: Durchschnittsverbrauch, Durchschnittsstrom und Spitzenstromwert (CC), und der Datenübertragungsparameter (PT) ein Parameter ist, ausgewählt aus der Gruppe, die von den folgenden Parametern gebildet wird: Paketgröße übertragener Daten, Übertragungsrate (DT) und Kommunikationsprotokoll.

4. Verfahren nach einem der vorstehenden Ansprüche, wobei jede Sicherheitsaktion ausgewählt ist aus der Gruppe, die gebildet wird von: einer Unterbrechung der Stromversorgung (CA) des verbundenen Objekts, einer Zurücksetzung von Standardparametern (RP), und einer Übertragung von Meldungssignalen (SN) mittels einer Kommunikationsverbindung (LC) an einen IT-Server (8).

5. Verfahren nach Anspruch 4, wobei die Kommunikationsverbindung (LC) auf einer Technologie basiert, ausgewählt aus der Gruppe, die von den folgenden Technologien gebildet wird: LoRa, SigFox, Mobilfunknetz, Wi-Fi und Ethernet.

6. Verbundenes Objekt, das eine Vorrichtung (9) zur Überwachung mindestens einer Aktivität des verbundenen Objekts (2, 3, 4) umfasst, wobei die Vorrichtung (9) umfasst
eine Messstufe (10), die dafür konfiguriert ist, eine erste periodische Messung mindestens eines internen Signals (SM, SC), das für die mindestens eine Aktivität des verbundenen Objekts (2 bis 4) repräsentativ ist, durchzuführen,
eine Rechenstufe (11), die dafür konfiguriert ist, eine erste nicht-kryptografische Berechnung mindestens eines Aktivitätsparameters (PA) auf Grundlage des mindestens einen gemessenen internen Signals durchzuführen,
eine Vergleichsstufe (12), die dafür konfiguriert ist, jeden berechneten Aktivitätsparameter (DTC, CCC) und einen vorbestimmten Bereich von Sollwerten des entsprechenden Aktivitätsparameters (DTR, CCR) zu vergleichen, und
eine Steuerstufe (13), die dafür konfiguriert ist, mindestens eine Sicherheitsaktion auszulösen, wenn der mindestens eine berechnete Aktivitätsparameter (DTC, CCC) außerhalb des Sollwertbereichs (DTR, CCR) liegt,
wobei die Überwachungsvorrichtung (9) dafür konfiguriert ist, den Sollwertbereich jedes Aktivitätsparameters (DTR, CCR) in einer Lernphase (PA) zu aktualisieren,
und wobei in der Lernphase (PA)
die Messstufe (10) dafür konfiguriert ist, unter Autorisierung eines Benutzers des verbundenen Objekts eine zweite periodische Messung des mindestens einen internen Signals (SM, SC) während einer vorbestimmten oder durch den Benutzer konfigurierbaren Dauer durchzuführen,
die Rechenstufe (11) dafür konfiguriert ist, eine zweite nicht-kryptografische Berechnung des mindestens einen Aktivitätsparameters (PA) auf Grundlage des mindestens einen internen Signals (SM, SC), das während der Dauer durch die zweite periodische Messung gemessen wurde, durchzuführen, und
die Steuerstufe (13) weiter dafür konfiguriert ist, den Sollwertbereich des entsprechenden Aktivitätsparameters (DTR, CCR) auf Grundlage jedes berechneten Aktivitätsparameters (NDTC, NCCC) am Ende der zweiten Berechnung zu aktualisieren.

7. Verbundenes Objekt nach Anspruch 6, wobei jeder Aktivitätsparameter (PA) einen Verbrauchsparameter (PC) und/oder einen Datenübertragungsparameter (PT) umfasst.

8. Verbundenes Objekt nach Anspruch 7, wobei der Verbrauchsparameter (PC) ein Parameter ist, ausgewählt aus der Gruppe, die von den folgenden Parametern gebildet wird: Durchschnittsverbrauch, Durchschnittsstrom und Spitzenstromwert (CC), und der Datenübertragungsparameter (PT) ein Parameter ist, ausgewählt aus der Gruppe, die von den folgenden Parametern gebildet wird: Paketgröße übertragener Daten, Übertragungsrate (DT) und Kommunikationsprotokoll.

9. Verbundenes Objekt nach einem der Ansprüche 6 bis 8, wobei jede Sicherheitsaktion ausgewählt ist aus der Gruppe, die gebildet wird von: einer Unterbrechung der Stromversorgung (CA) des verbundenen Objekts, einer Zurücksetzung von Standardparametern (RP), und einer Übertragung von Meldungssignalen (SN) mittels einer Kommunikationsverbindung (LC) an einen IT-Server (8).

10. Verbundenes Objekt nach Anspruch 9, wobei die Kommunikationsverbindung (LC) auf einer Technologie basiert, ausgewählt aus der Gruppe, die von den folgenden Technologien gebildet wird: LoRa, SigFox, Mobilfunknetz, WiFi und Ethernet.

11. Verbundenes Objekt nach Anspruch 9 oder 10, das weiter Verarbeitungsmittel (6), die dafür konfiguriert sind, Informationen zu erzeugen, die aus dem Betrieb des verbundenen Objekts (4) resultieren, und Kommunikationsmittel (7) umfasst, die dafür konfiguriert sind, diese Informationen über die Verbindung (LC) nach außerhalb des verbundenen Objekts (4) zu übertragen.

12. Verbundenes Objekt nach Anspruch 11, wobei die Überwachungsvorrichtung (9) in Form eines Softwaremoduls in einen unveränderlichen Programmspeicher (MM) der Verarbeitungsmittel (7) eingebettet ist.

13. Verbundenes Objekt nach Anspruch 11, wobei die Überwachungsvorrichtung (9) in eine Mikrosteuereinheit eingebettet ist, die dafür konfiguriert ist, mindestens einen Teil der von den Verarbeitungsmitteln (6) zu Überwachungszwecken übertragenen Informationen zu empfangen, und ein Ausführungsprogramm umfasst, das in einem unveränderlichen Programmspeicher gespeichert ist, wobei die Mikrosteuereinheit keine Verbindung zu den Kommunikationsmitteln (7) aufweist.

14. Verbundenes Objekt nach Anspruch 13, wobei die Überwachungsvorrichtung mit den Kommunikationsmitteln gekoppelt ist, um die Meldungssignale über die Verbindung (LC) zu übertragen.

15. Überwachungsvorrichtung, die in ein verbundenes Objekt nach einem der Ansprüche 6 bis 14 eingebettet ist.

16. Elektronisches System, das ein verbundenes Objekt oder mehrere verbundene Objekte (2, 3, 4) nach einem der Ansprüche 6 bis 14 umfasst.

## Claims

1. A method for monitoring at least one activity of a connected object (2, 3, 4), the method being implemented by a device for monitoring said connected object, the method comprising
a first periodic measurement of at least one internal signal (SM, SC) representative of said at least one activity of the connected object (2, 3, 4),
a first non-cryptographic calculation of at least one activity parameter (PA) representative of said at least one activity from said at least one measured internal signal,
a comparison between each activity parameter (DTC, CCC) calculated at the end of the first calculation and a predetermined range of instructions for the corresponding parameter (DTR, CCR), and
a triggering of at least one safety action if at least one calculated activity parameter (DTC, CCC) at the end of the first calculation is outside said range of instructions (DTR, CCR), wherein the range of instructions of each activity parameter (DTR, CCR) is intended to be updated in a learning phase (PA) also implemented by said monitoring device,
and wherein the learning phase (PA) includes
a second periodic measurement, under authorisation of a user of the connected object, of said at least one internal signal (SM, SC) for a duration which is predetermined or configurable by the user,
a second non-cryptographic calculation of said at least one activity parameter (PA) from said at least one internal signal measured by said second periodic measurement during said duration, and
an update of the range of setpoints of the corresponding activity parameter (DTR, CCR) from each calculated activity parameter (NDTC, NCCC) at the end of the second calculation.

2. The method according to claim 1, wherein each activity parameter (PA) includes a consumption parameter (PC) and/or a data transmission parameter (PT).

3. The method according to claim 2, wherein the consumption parameter (PC) is a parameter selected from the group formed by the following parameters: average consumption, average current and peak current (CC) value, and the data transmission parameter (PT) is a parameter selected from the group formed by the following parameters: size of transmitted data packets, transmission rate (DT) and communication protocol.

4. The method according to any one of the preceding claims, wherein each safety action is selected from the group formed by: a power cut (CA) of the connected object, a reset of parameters (RP) to default, and a transmission of notification signals (SN) to a computer server (8) via a communication link (LC).

5. The method according to claim 4, wherein the communication link (LC) is based on a technology selected from the group formed by the technologies: LoRa, SigFox, mobile telephone network, Wi-Fi, and Ethernet.

6. A connected object, comprising a monitoring device (9) for at least one activity of the connected object (2, 3, 4), the device (9) including
a measuring stage (10) configured to perform a first periodic measurement of at least one internal signal (SM, SC) representative of said at least one activity of the connected object (2 to 4),
a calculation stage (11) configured to perform a first non-cryptographic calculation of at least one activity parameter (PA) from said at least one measured internal signal,
a comparison stage (12) configured to compare each calculated activity parameter (DTC, CCC) and a predetermined range of setpoints of the corresponding activity parameter (DTR, CCR), and
a control stage (13) configured to trigger at least one safety action if said at least one calculated activity parameter (DTC, CCC) is outside said range of instructions (DTR, CCR),
wherein the monitoring device (9) is configured to update the range of setpoints of each activity parameter (DTR, CCR) in a learning phase (PA),
and wherein in the learning phase (PA),
the measuring stage (10) is configured to carry out a second periodic measurement, under authorisation of a user of the connected object, of said at least one internal signal (SM, SC) for a duration which is predetermined or configurable by the user,
the calculation stage (11) is configured to carry out a second non-cryptographic calculation of said at least one activity parameter (PA) from said at least one internal signal (SM, SC) measured by said second periodic measurement during said duration, and
the control stage (13) is further configured to update the range of setpoints of the corresponding activity parameter (DTR, CCR) from each activity parameter (NDTC, NCCC) calculated at the end of the second calculation.

7. The connected object according to claim 6, wherein each activity parameter (PA) includes a consumption parameter (PC) and/or a data transmission parameter (PT).

8. The connected object according to claim 7, wherein the consumption parameter (PC) is a parameter selected from the group formed by the following parameters: average consumption, average current and peak current (CC) value, and the data transmission parameter (PT) is a parameter selected from the group formed by the following parameters: size of transmitted data packets, transmission rate (DT) and communication protocol.

9. The connected object according to any one of claims 6 to 8, wherein each safety action is selected from the group formed by: a power cut (CA) of the connected object, a reset of parameters (RP) to default, and a transmission of notification signals (SN) to a computer server (8) via a communication link (LC).

10. The connected object according to claim 9, wherein the communication link (LC) is based on a technology selected from the group formed by the technologies: LoRa, SigFox, mobile telephone network, WiFi, and Ethernet.

11. The connected object according to claim 9 or 10, further comprising processing means (6) configured to generate information resulting from the operation of the connected object (4) and communication means (7) configured to transmit this information outside the connected object (4) on said link (LC).

12. The connected object according to claim 11, wherein the monitoring device (9) is incorporated in the form of a software module in a non-modifiable program memory (MM) of the processing means (7).

13. The connected object according to claim 11, wherein the monitoring device (9) is incorporated in a microcontroller configured to receive at least part of the information transmitted by the processing means (6) for monitoring purposes and includes an execution program stored in a non-modifiable program memory, the microcontroller having no connection with the communication means (7).

14. The connected object according to claim 13, wherein the monitoring device is coupled to the communication means so as to transmit the notification signals on said link (LC).

15. A monitoring device, incorporated in a connected object according to any one of claims 6 to 14.

16. An electronic system, comprising one or more connected objects (2, 3, 4) according to any one of claims 6 to 14.
